# EUROPÄISCHE PATENTANMELDUNG

(11) **EP 1 215 101 A2**
(43) Veröffentlichungstag der Anmeldung: **19.06.2002**
(21) Anmeldenummer: 01128501.2
(22) Anmeldetag: 29.11.2001
(51) Int. Cl.: B62B 5/00

(54) **Antriebseinheit zu Bodenbearbeitungsgerät**

(30) Priorität: 13.12.2000 CH 24232000
(71) Anmelder: Air-tec AG, CH-4455 Zunzgen (CH)
(72) Erfinder: Wyser, René Max, 4456 Tenniken (CH)
(74) Vertreter: Fleck, Hermann-Josef, Dr.-Ing.

(57) **Zusammenfassung**

Eine Antriebseinheit zu Bodenbearbeitungsgeräten ohne Fahrantrieb wird vorgestellt. Sie kann an jedes Bodenbearbeitungsgerät angebaut werden. Die Kupplungsvorrichtung ist auf einer einfachen, dem Prinzip des Zahnradantriebes folgenden Vorrichtung aufgebaut. Diese Kupplungsvorrichtung trennt die Verbindung zwischen der Antriebseinheit und dem Bodenbearbeitungsgerät selbständig, wenn z.B. gegen eine Wand oder einen andern Widerstand in Fahrrichtung gefahren wird.

## Beschreibung

Die vorliegende Erfindung betrifft eine Antriebseinheit zu einem Bodenbearbeitungsgerät gemäss Oberbegriff des Patentanspruchs 1.

Schwere Bodenbearbeitungsgeräte wie sie z.B. für das Entfernen von Strassenzeichnungen oder das Aufrauhen von Asphaltbelägen Verwendung finden sind meist mit einem Antrieb versehen. Diese Antriebe werden immer über eine Kupplung mit dem Gerät verbunden. Dadurch kann das Bedienungspersonal den Antrieb bei Bedarf aus- und einkuppeln. Neben der Kupplung gibt es bei elektrisch betriebenen Geräten auch den NotAus Schalter, mit dem der ganze Antrieb mit einem Knopfduck ausgeschaltet wird. Maschine und Antrieb stehen dann still, während die Kupplung noch immer mit dem Fahrgestell im Eingriff steht.

Geräte der hier zu beschreibenden Art, die hauptsächlich vom begleitenden Personal von Hand bedient werden sind meist mit Kupplungen, die form- und kraftschlüssige Verbindung ermöglichen, versehen. Nur für sehr grosse Geräte setzt man ein- und ausrückbare Reibungskupplungen oder Flüssigkeitskupplungen ein, welche stossfreies Anfahren ermöglichen. Reibungs- und Flüssigkeitskupplungen sind nicht formschlüssig. Sie bieten gegenüber den fest verbundenen Kupplungen den Vorteil, dass die Übertragung der für den Einsatz gewünschte Kraft mittels Flüssigkeit resp. Reibung beeinflusst werden kann. Diesen Vorteil bieten formschlüssige Kupplungen nicht.

Kleinere Geräte, die zur Entfernung von Raumbelägen wie Teppichen, Kunststoffbelägen oder Mörtelüberzügen verwendet werden, sind meistens nicht mit einem Fahrantrieb ausgerüstet. Erstens reicht die Kraft, um das Gerät vorwärts zu bewegen und zweitens würde mit einer form- und kraftschlüssigen Verbindung von Antrieb und Gerät immer wieder in die Wände gefahren. Nicht nur die Beschädigung der Wände ist ein absolut unerwünschter Effekt, sondern das Blockieren des Gerätes welches mit dem Antrieb gegen die Wand gedrückt wird, stellt eine unangenehme Arbeitsbehinderung dar. Reibungs- oder Flüssigkeitskupplungen sind für kleine Geräte auch zu teuer.

Die vorliegende Erfindung stellt sich nunmehr die Aufgabe, eine Antriebseinheit zu Bodenbearbeitungsgeräten für Kleingeräte derart zu verbessern, dass unter Verwendung des Prinzips einer einfachen form- und kraftschlüssigen Kupplung die Formschlüssigkeit durch wenig Widerstand überwunden wird. Die Vorrichtung muss stabil genug sein, um dem rauhen Betrieb auf der Baustelle widerstehen zu können.

Diese Aufgabe löst eine Antriebseinheit zu einem Bodenbearbeitungsgerät mit den Merkmalen des Patentanspruches 1. Weitere erfindungsgemässe Merkmale gehen aus den abhängigen Ansprüchen hervor und deren Vorteile sind in der nachfolgenden Beschreibung erläutert.

In der Zeichnung zeigt:
- Fig 1: Ansicht einer Antriebseinheit, angebaut an einem Bodenbearbeitungsgerät
- Fig 2: Ansicht einer Antriebseinheit im Einsatz
- Fig 3: Ansicht einer Antriebseinheit ausgekuppelt
- Fig 4: Ansicht einer Antriebseinheit mit Verstellvorrichtung

Die Figuren stellen Ausführungsbeispiele dar, welche in der nachfolgenden Beschreibung erläutert werden.

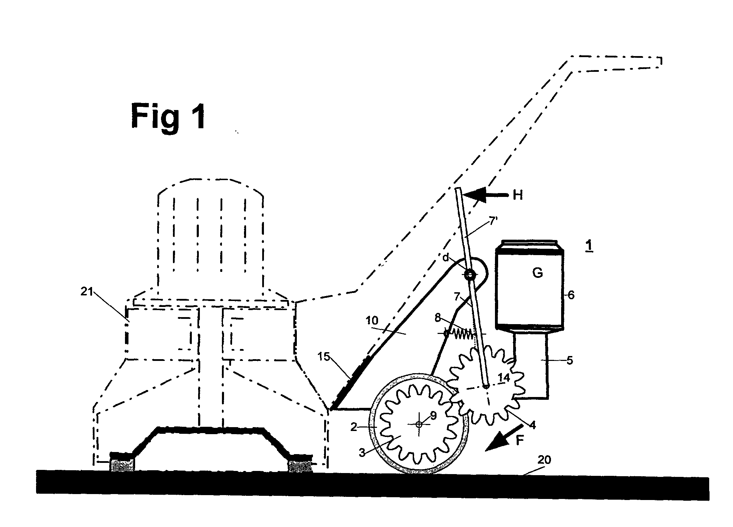

Die erfindungsgemässe Antriebseinheit 1 kann mit wenigen Handgriffen an jedem Bodenbearbeitungsgerät 21 mittels Montageplatte 15 angebaut werden. Sie ist mit Antriebsräder 2,2' ausgerüstet, welche z.B. mittels Gummibereifung auf dem Boden 20 halt finden um den Vortrieb zu gewährleisten. In Fig 1 ist gezeigt, dass die Antrriebsräder 2,2' auf derselben Unterlage 20 laufen, die vom Bodenbearbeitungsgerät 21 bearbeitet wird. Der Antrieb dieser Antriebsräder 2,2' erfolgt über ein einfaches und widerstandsfähiges Zahnradsystem 3,4. Auf der Achse 9 sind die Antriebsräder 2,2' und das getriebene Zahnrad 3 fest montiert. Ein Motor 6 treibt über ein Getriebe 5 das treibende Zahnrad 4. Die ganze Treibereinheit 4,5,6 ist über eine Schwinge 7 am Fahrgestell 10 im Drehpunkt d drehbar gelagert und befestigt. Das Fahrgestell 10 seinerseits wird über die Montageplatte 15 mit dem Bodenbearbeitungsgerät 21 fest verbunden.

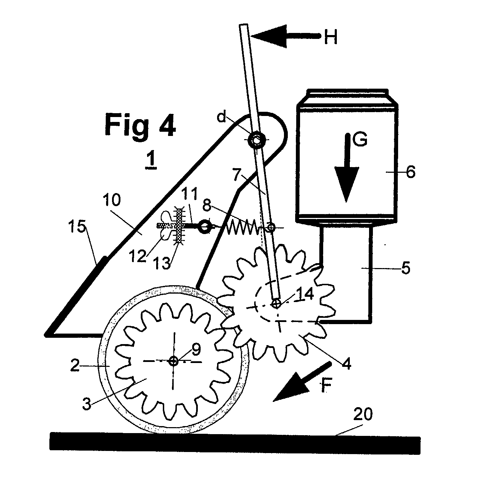

Durch das Eigengewicht G wird die ganze Treibereinheit 4,5,6 um den Drehpunkt d nach unten und in der Richtung F - radial zum Punkt d - gegen das mit dem Fahrgestell 10 fest verbundenen Zahnrad 3 gedrückt. Dadurch wird das treibende Zahnrad 4 mit dem getriebenen Zahnrad 3 in Eingriff gehalten. Beide Zahnräder 3,4 sind von der Art der groben Zahnteilung. Sie greifen nach dem Zufallsprinzip ein. Um die Wirkung des Eigengewichts G zu verstärken, aber auch um die Kraft P mit der das treibende Zahnrad 4 mit dem getriebenen Zahnrad 3 in Eingriff kommt zu regulieren, kann zwischen Schwinge 7 und Fahrgestell 10 eine Feder 8 eingesetzt werden. Es ist vorteilhaft, die Zugkraft die mit dieser Feder 8 zwischen Schwinge 7 und Fahrgestell 10 aufgebracht wird, durch Einbau einer Ringschraube 11 (Fig 4) einstellbar zu gestalten.

Diese Einstellbarkeit stellt ein im Fahrzeug und Maschinenbau gängige Methode dar, die in Fig 4 dargestellt ist. Die Feder 8 wird an der Ringschraube 11 eingehängt. Diese ist in einer Durchführung in der Lasche 13 z.B. mittels Flügelmutter 12 gehalten. Die Lasche 13 ist mit dem Fahrgestell 10 z.B. durch eine Schweissverbindung fest verbunden.

Das Fahrgestell 10 kann an verschiedene Bodenbearbeitungsgeräte 21 angebaut werden, die z.B. für das Fräsen zur Entfernung von Teppichböden und Kunststoffbelägen und für Schleifmaschinen für die Egalisierung von Zementböden dienen.

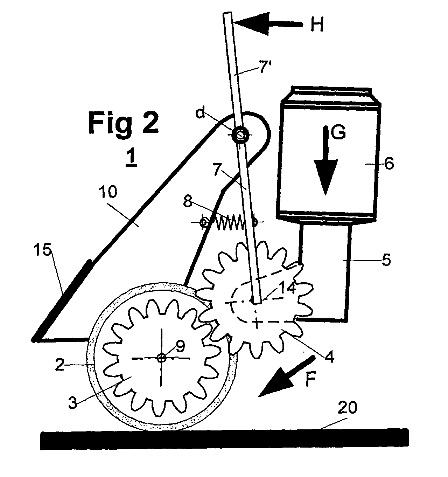

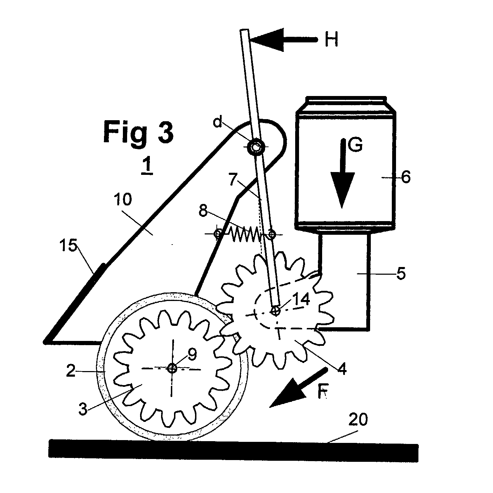

Die Funktionsweise der Antriebseinheit 1 ist einfach. Die Verlängerung 7' der Schwinge 7 hält die ganze Treibereinheit 4,5,6 gegen die Kraft F ausserhalb des Eingriffs der Zahnräder 3,4 Fig 3. Lässt man nun die Kraft H weg, wird die Treibereinheit 4,5,6 durch die Schwerkraft G und den Zug der Federn 8 in Richtung F bewegt. Das treibende Zahnrad 4 kommt mit dem getriebenen Zahnrad 3 in Eingriff Fig 2. Der Bodenbearbeitungsprozess beginnt und das Gerät wird durch den Motor 6 langsam und gleichmässig vorwärts getrieben. Steht das Bodenbearbeitungsgerät 21 z.B. an einer Wand an, wird das treibende Zahnrad 4 aus dem Eingriff gedrückt, indem die ganze Treibereinheit 4,5,6 um den Drehpunkt d der Schwinge 7 gedreht wird. Sobald der Widerstand gegen den Vortrieb wieder wegfällt, bewegt sich Bodenbearbeitungsgerät 21 und Antriebseinheit 1 wieder gleichmässig in Fahrtrichtung.

Der grosse Vorteil dieser Vorrichtung ist die einfache Bedienung. Die Vorrichtung kann an ein dafür vorbereitetes Bodenbearbeitungsgerät 21 einfach angebaut werden. Das Eigengewicht G der Treibereinheit 4,5,6 wird die Zahnräder 3,4 bereits in Eingriff bringen. Der Zug der Feder 8 wird schwach eingestellt. Der Eingriff der Zahnräder 3,4 erfolgt nur durch durch das Eigengewicht der Treibereinheit 4,5,6. Genügt der Vortrieb für die Bodenbearbeitung nicht, d.h. drückt der Widerstand des Bodenbearbeitungsgerätes 21 die Zahnräder 3,4 aus dem Eingriff, kann die Kraft F durch nachziehen der Feder 8 mit der Flügelmutter 12 erhöht werden.

## Patentansprüche

1. Antriebseinheit zu Bodenbearbeitungsgeräten ohne Fahrantrieb, **dadurch gekennzeichnet, dass** ein getriebenes Zahnrad (3) mit der Antriebsache (9) fest verbunden ist, ein über einen Motor (6) und ein Getriebe (5) betriebenes, treibendes Zahnrad (4) mit dem getriebenen Zahnrad (3) angeordnet sind, wobei die Treibereinheit (4,5,6) über eine Schwinge (7) im Drehpunkt (d) so drehbar gelagert ist, dass die Distanz der Achse (14) des treibenden Zahrades (4) zum Drehpunkt (d) kleiner ist als die Distanz der Achse (9) des getriebenen Zahnrades (3) und die horizontale Distanz des Drehpunktes (d) zur Achse (9) kleiner ist, als die horizontale Distanz der Achse (14) des zur Achse (9).

2. Antriebseinheit nach Anspruch 1, **dadurch gekennzeichnet, dass** die den Eingriff der beiden Zahnräder (3,4) bewirkenden Kräfte (F) mittels Schwerkraft durch das Gewicht der Treibereinheit (4,5,6) erzeugt werden.

3. Antriebseinheit nach einem der vorhergehenden Ansprüche, **dadurch gekennzeichnet, dass** die den Eingriff der beiden Zahnräder (3,4) bewirkenden Kräfte (F) durch Federn (8) zwischen den beiden Achsen (9,14) erzeugt werden.

4. Antriebseinheit nach einem der vorhergehenden Ansprüche, **dadurch gekennzeichnet, dass** die Federn (8) am Fahrgestell (10) durch entsprechende Mittel (11,12,13) verstellbar befestigt ist.
